Europäisches Patentamt

European Patent Office

Office européen des brevets

(19)

(11) EP 0 540 397 B1

(12)

# FASCICULE DE BREVET EUROPEEN

(45) Date de publication et mention
de la délivrance du brevet:
**27.08.1997  Bulletin 1997/35**

(51) Int Cl.⁶: **H04J 3/14**, H04J 3/06

(21) Numéro de dépôt: **92402841.8**

(22) Date de dépôt: **16.10.1992**

(54) **Procédé et dispositif de comptage des glissements d'horloge**

Anordnung und Verfahren zum Zählen von Taktschlupfen

Method and circuit for counting clock-slips

(84) Etats contractants désignés:
**DE GB**

(30) Priorité: **18.10.1991  FR 9112895**

(43) Date de publication de la demande:
**05.05.1993  Bulletin 1993/18**

(73) Titulaire: **FRANCE TELECOM**
**75015 Paris (FR)**

(72) Inventeur: **Sempe, Christian**
**F-31700 Blagnac (FR)**

(74) Mandataire: **Dubois-Chabert, Guy et al**
**Société de Protection des Inventions**
**25, rue de Ponthieu**
**75008 Paris (FR)**

(56) Documents cités:
**EP-A- 0 301 481          DE-B- 2 721 764**

- **PROCEEDINGS IEEE GLOBAL TELECOMMUNICATIONS CONFERENCE vol. 2, 15 Novembre 1987, TOKYO (JP) pages 895 - 902 ALAN MILES 'DIGITAL PERFORMANCE MONITORING SYSTEM'**
- **RADIO AND ELECTRONIC ENGINEER. vol. 54, no. 2, 1 Février 1984, LONDON GB pages 97 - 106 P. HUCKETT 'PERFORMANCE EVALUATION IN AN ISDN DIGITAL TRANSMISSION IMPAIRMENTS'**

## Description

L'invention concerne un dispositif de comptage de glissement d'horloge sur des liaisons de transmission numériques tel les que les liaisons satellite, les liaisons par câble, ou par faisceaux hertziens.

Les débits numériques que l'on rencontre couramment sur de telles liaisons sont de 2 Mbits/s, 8 Mbits/s, 34 Mbits/s jusqu'à 140 Mbits/s selon la liaison et parfois plus, ou de valeurs différentes lorsqu'il s'agit de standards américains : 1,5 Mbits/s, 6 Mbits/s, 45 Mbits/s etc...

Les informations transmises pour ces liaisons sont multiplexées dans le temps et sont classiquement appelées liaisons MIC.

On rappelle qu'une liaison MIC pour un bloc primaire numérique, c'est-à-dire pour une liaison à 2Mbits/s se présente sous la forme de trames T divisées en intervalles de temps IT, chaque trame comportant un intervalle de temps IT0 réservé à la synchronisation trame, des intervalles de temps réservés aux données (voies de parole dans ce cas), et parfois un intervalle de temps IT16 réservé à la signalisation. Le nombre d'IT est de 32.

Une trame à 8 Mbits/s est constituée de secteurs ; le secteur I comprend un mot VT de verrouillage de trame. Une trame à 34 Mbits/s est constituée également de quatre secteurs, le premier débutant par un mot VT de verrouillage de trame.

Une trame à 140Mbits/s est constituée de six secteurs, le premier débutant par un mot VT de verrouillage de trame.

Seule la structure de la trame à 2Mbits/s a la particularité de présenter un mot de verrouillage de trame sur deux IT. En effet, ce mot est constitué par sept éléments binaires (bits) contenus dans l'IT0 d'une trame Tn, et du deuxième élément binaire de l'IT0 de la trame Tn+1 (consécutive).

On rappelle également qu'un glissement d'horloge est le résultat d'une variation lente ou rapide (dérive) de la fréquence d'horloge du bloc primaire numérique pour une liaison à 2 Mbits/s (du bloc secondaire numérique pour une liaison à 8 Mbits/s ...). Cette dérive se traduit par un saut ou un redoublement de bits entraînant une perte de verrouillage de trame.

On rappelle également qu'une perte de verrouillage de trame n'est pas uniquement due aux glissements d'horloge, mais aussi à d'autres erreurs de transmission.

Il est connu de réaliser un comptage des glissements d'horloge pour des liaisons à 64 kbits/s et à 2 Mbits/s. Plusieurs méthodes peuvent être répertoriées.

On cite par exemple une première méthode qui est une méthode analogique consistant à utiliser une référence temporelle. Cette référence est obtenue au moyen d'une horloge de précision avec laquelle on mesure la dérive de l'horloge du bloc primaire numérique (bloc qui correspond à la liaison à 2 Mbits/s). Cette méthode, bien que très précise, est lourde en investissement et en matériel.

On pourra se reporter à l'article Frequency and Time de Rohde & Schwartz - info 001 104 E-1 pour plus de précisions.

On peut citer également une deuxième méthode qui est cette fois numérique. Elle consiste à insérer dans la trame une séquence pseudo-aléatoire, ce qui oblige à réserver un IT pour cette séquence. Une analyse en réception de cet IT est faite pour déterminer s'il y a eu glissement ou non.

Cette méthode présente l'inconvénient d'être mise en oeuvre par des moyens importants et également de ne pas être transparente à la transmission. En effet, elle entraîne la perte d'un IT pour la transmission d'informations utiles, cet IT étant réservé à la séquence pseudo-aléatoire.

On pourra se reporter à la recommandation G822 du CCITT pour plus de précisions.

D'autre part, il est également connu à ce jour une technique de tests consistant à réaliser une analyse de trafic réel (LDA : Live Data Analysis). Cette technique permet entre autres de réaliser des mesures de glissements d'horloge.

Cette technique consiste à utiliser deux appareils de tests. Un premier appareil reçoit le signal transmis et l'analyse pour transmettre une liste de vérification par une liaison de données au deuxième appareil qui reçoit cette liste et les informations de la ligne de transmission.

Ce deuxième appareil réalise également une liste de vérification et la compare avec celle qu'il a reçue.

Cette méthode présente l'inconvénient de nécessiter un double appareillage et une liaison de données.

La présente invention a pour but de remédier à ces inconvénients.

On peut également citer trois autres documents de l'art antérieur. Une demande de brevet EP-A-0 301 481 (Siemens Aktiengesellschaft) décrit un dispositif de synchronisation.

Dans un dispositif d'identification de glissement de bit, l'intervalle de temps t des impulsions de synchronisation à deux entrées est mesuré. Si l'intervalle de temps t dépasse une valeur to déterminée, la synchronisation du compteur de cadrage principal s'effectue comme dans le dispositif de synchronisation connu. Si l'intervalle de temps t reste inférieur au temps to, le dispositif d'identification de glissement de bit passe à l'état "glissement de bit". Dans cet état, la sortie bloque l'entrée du compteur de cadrage principal.

Si l'impulsion considérée est présente à la première entrée, temporellement avant ou après l'impulsion à la seconde entrée, le compteur de cadrage principal compte plus lentement ou plus rapidement que le compteur de cadrage auxiliaire et les impulsions de synchronisation aux sorties commencent à se rapprocher temporellement, jusqu'à ce que soit atteinte une coïncidence temporelle. Des que le dispositif d'identification de glissement de Dit identifie cette coïncidence, il revient à son état initial. A sa sortie apparaît un "1" logique, permettant à la liaison allant de la logique de synchronisation à l'entrée du compteur de cadrage principal de redevenir efficace. La sortie du dispositif d'identification de glissement de bit passe à l'état de repos et la fréquence de cadencement à l'entrée du compteur de cadrage principal redevient égale à la fréquence de cadencement à l'entrée du circuit de commutation de fréquence de cadencement. A partir de cet état, le dispositif d'identification de glissement de bit et le circuit de commutation de fréquence de cadencement ne sont plus actifs.

Le principe de détection de glissement retenu est basé sur la détection de l'asynchronisme de deux signaux dont le premier est généré par un détecteur de présence de mot de cadrage et le second par un compteur d'intervalles de temps, initialisé par le premier système (une simple détection).

Un article intitulé "Digital Performance Monitoring System" de Alan Miles (Proceedings Global Telecommunications Conference ; volume 2, 15 novembre 1987, Tokyo, pages 895-902) décrit un système pour surveiller le fonctionnement d'une liaison de transmission numérique à un taux effectif de 64 kbits/seconde. Ceci est réalisé en utilisant un signal d'alignement de trame (FAS) d'une liaison 8, 34 ou 140 Mbits/seconde. Un tel système réalise notamment une détection d'erreur à l'intérieur d'un signal FAS et la mémorisation d'un nombre d'erreurs pour une période jusqu'à une seconde.

Cet article propose d'évaluer la qualité (G821 ou pseudo) d'une liaison numérique dont le débit peut être de 1 à 140 Mbits en extrayant des éléments binaires du mot de cadrage afin de reconstituer une liaison numérique à 64 Kbits/s (et dont le contenu est parfaitement connu) . Le but, ici aussi, est de qualifier, de surveiller la qualité d'une liaison en service sans injecter de séquence pseudo-aléatoire. Cette méthode est d'ailleurs utilisée sur les liaisons à 2 Mbits/s afin d'évaluer la qualité d'une liaison numérique. Le calcul est bien sûr effectué sur les éléments binaires reçus et un taux d'erreurs est calculé à partir des résultats acquis.

Une demande de brevet DE-B-27 21 764 (SIEMENS A.G.) décrit un procédé de détermination des taux de bit d'erreur dans les systèmes de transmission PCM, pendant une durée de contrôle. Pendant cette durée, aucune transmission de signaux d'information n'a lieu. Par contre, une succession pseudo-aléatoire s'effectue avec des interruptions périodiques dues à la transmission, par le système, du mot clé de cadrage et du mot d'état. La longueur du mot d'état est choisie telle qu'il se produit dans son signal binaire une distribution de bits de valeur un et de bits de valeur zéro, qui est à peu près celle du bruit.

La transmission de la succession pseudo-aléatoire est interrompue pendant la transmission du mot clé de cadrage et du mot d'état. Après l'interruption, la transmission de la succession pseudo-aléatoire est enregistrée avec la position binaire qui suit directement la dernière position binaire transmise avant l'interruption.

Cette demande repose sur la mesure des erreurs sur une séquence PSA envoyée de façon séquentielle. Il s'agit dans cette demande de quantifier le nombre d'éléments binaires reçus bons par rapport au nombre total reçu.

La présente invention a pour objet un procédé de comptage des glissements d'horloge d'une liaison de transmission numérique constituée de trames (ou secteurs) repérables par un mot de verrouillage de trame, dans lequel il y a déclenchement d'une première détection des mots de verrouillage de trame de la liaison de transmission avec comparaison à un mot de verrouillage de trame de référence, caractérisé en ce qu'il comporte les étapes suivantes :

- déclenchement d'une deuxième détection des mots de verrouillage de trame, décalée dans le temps par rapport à la première détection, dès qu'une erreur a été détectée par celle-ci,
- détermination de perte et de reprise de verrouillage de trame à partir de critères prédéterminés ;
- comptage d'un glissement d'horloge lorsqu'il y a eu détermination de perte de verrouillage de trame à l'issue de la première détection et reprise de verrouillage de trame à l'issue de la deuxième détection.

Selon une deuxième caractéristique du procédé, le déclenchement d'une première détection consiste à comparer le contenu du premier IT des trames qui se succèdent à un mot de verrouillage de trame de référence, la détection ayant bien lieu lorsqu'il y a identité.

Selon une troisième caractéristique du procédé, le déclenchement d'une deuxième détection consiste à rechercher dans la trame succédant celle pour laquelle il y a eu détection d'une erreur à l'issue de la première détection, le mot de verrouillage de trame par comparaison successive de chaque contenu d'IT au mot de verrouillage de trame de référence, la détection ayant bien lieu lorsqu'il y a identité.

Selon une quatrième caractéristique du procédé, la détermination de perte de verrouillage de trame a lieu lorsqu'à l'issue de la première détection, l'on a obtenu un nombre n déterminé d'erreurs et que l'on a obtenu un nombre p déterminé d'erreurs à l'issue de la deuxième détection, p étant inférieur à n, une erreur de transmission autre qu'un glissement d'horloge étant détectée.

Selon une cinquième caractéristique du procédé, la détermination de reprise de verrouillage de trame a lieu dès qu'il y a détection d'un mot de verrouillage de trame lors de la deuxième détection.

Selon une autre caractéristique du procédé, dans le cas où le signal numérique est un signal à 2 Mbits/s, le mot de verrouillage de trame étant constitué par le contenu de l'IT0 d'une trame paire Tn et le deuxième bit de l'IT0 de la trame impaire Tn+1 , la détermination de la perte de verrouillage de trame a lieu lorsqu'il y a trois IT0 consécutifs de trames paires reçus avec erreur et/ou trois IT0 consécutifs de trames impaires reçues avec erreurs et la reprise de verrouillage de trame a lieu lorsqu'à un instant donné t1, il y a présence d'un IT0 juste d'une trame Tn, puis qu'à l'instant $t_2$ le deuxième bit de l'IT0 de la trame Tn+1 est juste et qu'à un instant t3, l'IT0 de la trame Tn+2 est juste.

La présente invention a également pour objet un dispositif de comptage de glissements d'horloge d'une liaison de transmission numérique constituée de trames (ou secteurs) repérables par un mot de verrouillage de trame, caractérisé en ce qu'il comporte :

- des premiers moyens de détection des mots de verrouillage de trame de la liaison,
- des deuxièmes moyens de détection des mots de verrouillage de trame activés par les premiers moyens lorsque ces premiers moyens ont détecté une erreur sur un mot de verrouillage de trame,
- des moyens de détermination de perte ou de reprise de verrouillage de trame par les premiers et deuxièmes moyens de détection,
- des moyens de comptage des glissements d'horloge activés par les moyens de détermination de perte et de reprise de verrouillage de trame lorsque, d'une part il y a eu perte de verrouillage de trame par les premiers moyens de détection et que d'autre part, il y a eu reprise par les deuxièmes moyens de détection.

Selon une autre caractéristique, le dispositif comporte en outre des moyens de compensation (1) des atténuations en ligne du signal numérique surveillé.

Selon une autre caractéristique, le dispositif comporte également des moyens de transformation (2) du signal codé reçu en signal binaire.

Selon une autre caractéristique, les premiers et deuxièmes moyens (30, 40) constituent respectivement un premier et un deuxième modules de recherche de verrouillage de trame comportant chacun un circuit base de temps générale (3, 4).

Selon une autre caractéristique, les moyens de détermination de perte et de reprise de verrouillage de trame comprennent le premier module (30) de verrouillage de trame, un compteur de bit (8), deux modules de synchronisation (6, 5), un module de détection de la présence du mot de verrouillage de trame (70) et un module de mémorisation et de comptage de trames (60).

D'autres caractéristiques et avantages de l'invention apparaîtront à la lecture de la description suivante faite à titre illustratif et non limitatif et en regard des dessins sur lesquels :

- la figure 1 représente les étapes essentielles du procédé conforme à l'invention sous la forme d'une succession de blocs fonctionnels ;
- la figure 2A représente les différentes étapes de façon plus détaillée ;
- la figure 2B représente un schéma de principe du dispositif conforme à l'invention permettant de mettre en oeuvre le procédé ;
- la figure 3 représente un schéma plus détaillé de réalisation du dispositif conforme à l'invention ;
- la figure 4 représente le schéma d'une vue d'ensemble de l'équipement de transmission dans lequel entre le dispositif.

Le procédé de comptage de glissement d'horloge et le dispositif de mise en oeuvre qui vont être décrits s'appliquent tout aussi bien à des liaisons de transmission de 2 Mbits/s qu'à des liaisons de 8, 34 ou 140 Mbits/s et plus et aux standards américains.

Dans la description qui va suivre, l'exemple de réalisation pratique qui est donné se rapporte plus précisément à une liaison à 2 Mbits/s et on parlera de trame plutôt que de secteurs, mais bien entendu, il ne s'agit là que d'un exemple illustratif que l'on peut transposer à des liaisons à plus haut débit ou à débit différent sans difficulté particulière.

Selon un premier aspect de l'invention, le comptage du glissement d'horloge se fait sans intrusion dans la transmission ; il y a par conséquent une entière transparence.

Ce comptage est réalisé à partir du signal numérique surveillé par prélèvement d'une faible partie de ce signal n'entraînant pas de dégradation (prélèvement inférieur à 10 %).

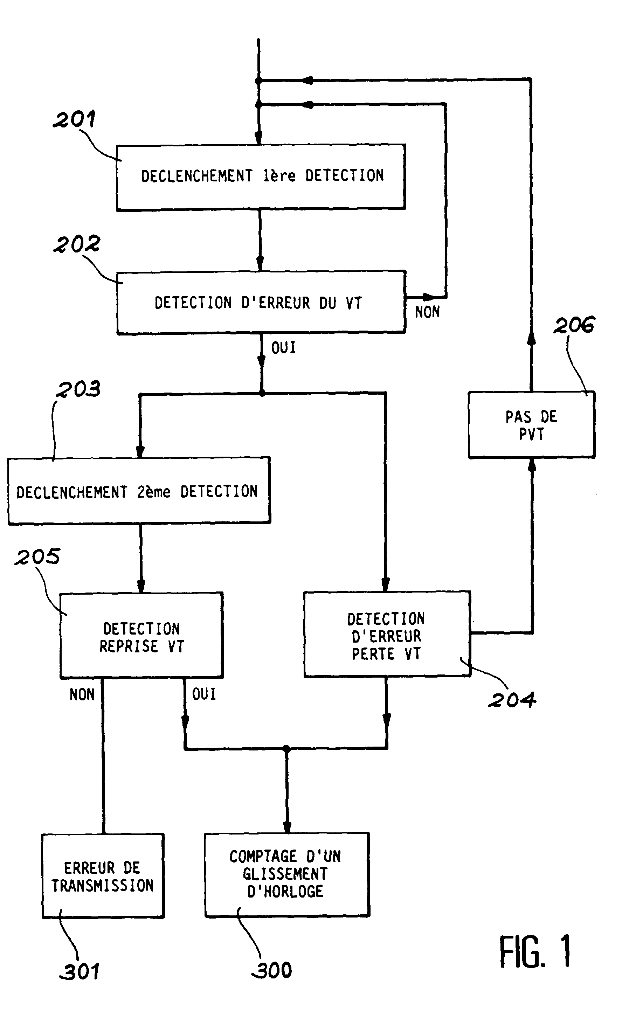

Avant cet exemple précis, le procédé est tout d'abord décrit dans son principe et illustré d'une façon générale par le schéma de la figure 1.

Le procédé de comptage des glissements d'horloge conforme à l'invention est basé sur une double détection des mots de verrouillage de trame (blocs 201, 203, fig. 1), décalée dans le temps, la deuxième détection étant déclenchée dès détection d'une erreur (bloc 202, fig. 1) sur un mot de verrouillage de trame VT à l'issue de la première détection.

On entend par première détection une phase de surveillance du contenu de l'IT ou des IT susceptibles de comporter le mot de verrouillage de trame. Il y a détection du mot VT lorsqu'à l'issue de la comparaison il y a égalité entre le contenu de ces IT et un mot de verrouillage de trame de référence. On entend par deuxième détection une phase de recherche du mot VT dans chaque IT des trames consécutives à la trame pour laquelle il y a eu détection d'erreur lors de la première détection.

Le procédé consiste ensuite, à partir de critères préétablis de perte et de reprise de verrouillage de trame, à compter un glissement d'horloge lorsqu'il y a eu perte de verrouillage de trame à l'issue de la première détection et reprise à l'issue de la deuxième détection.

On déclenche une première détection (bloc 201, fig. 1) des mots de verrouillage de trame, puis une deuxième (bloc 203, fig. 1) dès qu'une erreur est détectée à l'issue de la première détection.

Le critère de perte de verrouillage de trame et de reprise de verrouillage de trame (bloc 205, fig. 1) est fixé de la manière suivante :

Il y a perte de verrouillage de trame (bloc 204, fig. 1) (PVT) lorsqu'une erreur est détectée sur trois mots de verrouillage de trame successifs.

Il y a reprise de verrouillage de trame (bloc 205, fig. 1) (RVT) lorsqu'entre-temps, il y a eu détection d'au moins un mot de verrouillage de trame.

Le procédé conforme à l'invention permet de discriminer les erreurs de transmission, aux glissements d'horloge car, en effet, lorsqu'il n'y a pas de reprise de verrouillage de trame à l'issue de la deuxième détection, il s'agit alors d'une erreur de transmission autre qu'un glissement (bloc 301, fig. 1).

Dans le cas contraire, on compte un glissement (bloc 300, fig. 1).

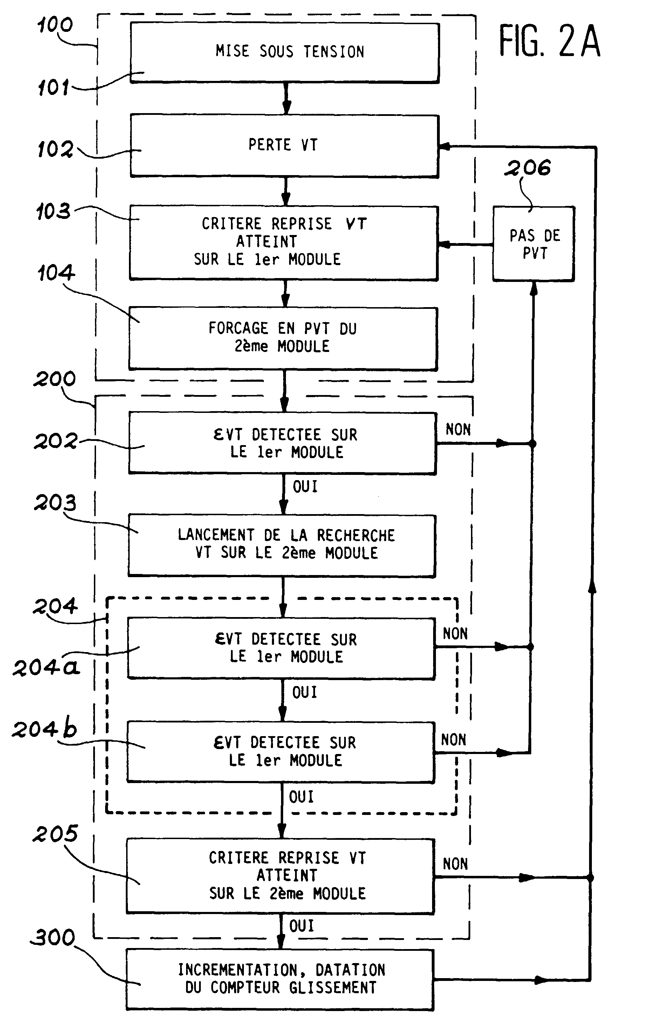

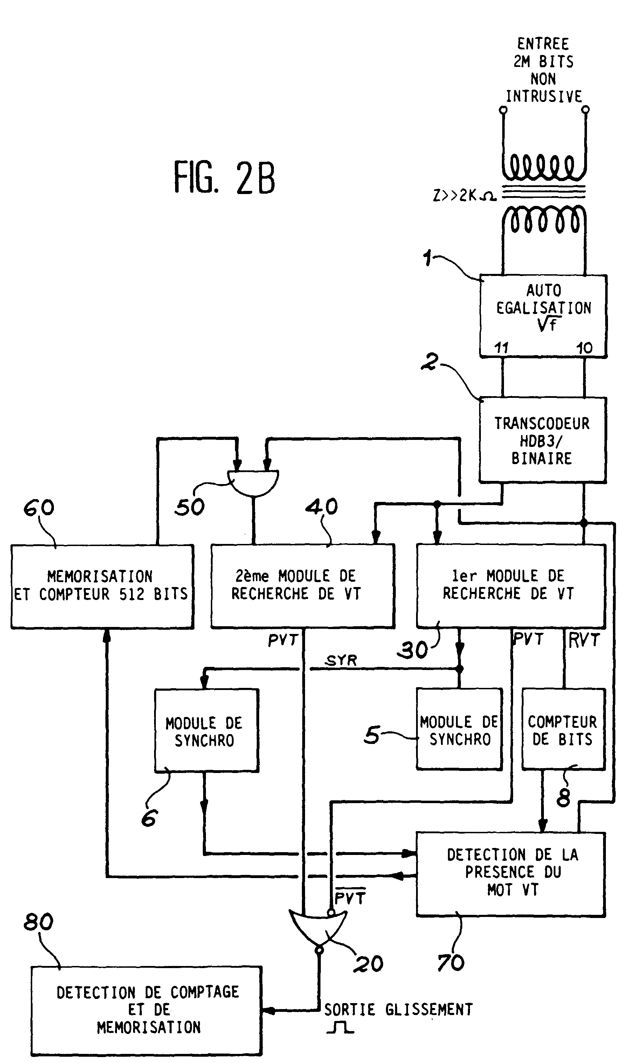

On se réfère maintenant aux schémas des figures 2A et 2B. La figure 2A illustre de façon plus détaillée le procédé conforme à l'invention tel qu'il est mis en oeuvre par le dispositif représenté sur la figure 2B.

Le procédé tel que mis en oeuvre comporte une étape d'initialisation 100 précisée dans ce qui suit.

Cette étape consiste tout d'abord à mettre le dispositif sous tension.

L'étape 102 indique que le dispositif est en configuration verrouillage de trame.

L'étape 103 indique que le critère de reprise de verrouillage de trame est atteint au cours de l'étape première détection réalisée par un premier module de détection référencé 30 sur la figure 2B.

L'étape 104 indique que la reprise de verrouillage de trame du premier module force un deuxième module 40 en configuration de perte de verrouillage de trame.

L'étape 200 se décompose en sous-étapes :

- lorsque le premier module détecte une première erreur sur un mot de verrouillage de trame (202), alors :
- le deuxième module est activé pour détecter en parallèle les mots de verrouillage de trame qui suivent (203),
- conformément au critère de verrouillage de trame fixé, on poursuit la détection du mot de verrouillage suivant et du suivant encore (204a, 204b) ; lorsqu'une erreur a été détectée sur ces mots, alors il y a perte de verrouillage de trame. Dans le cas contraire, il n'y a pas de perte de verrouillage de trame (206),
- en parallèle, si le deuxième module a réalisé une reprise de verrouillage de trame par détection d'au moins un des mots de verrouillage de trame (non détectés par le premier module) (205), alors il y a comptage d'un glissement, la première erreur détectée correspond à un glissement d'horloge (300),
- dans le cas contraire, il y a perte de verrouillage de trame par le deuxième module, due à un autre type d'erreur de transmission.

On va maintenant décrire plus précisément le schéma fonctionnel du dispositif conforme à l'invention représenté sur la figure 2B.

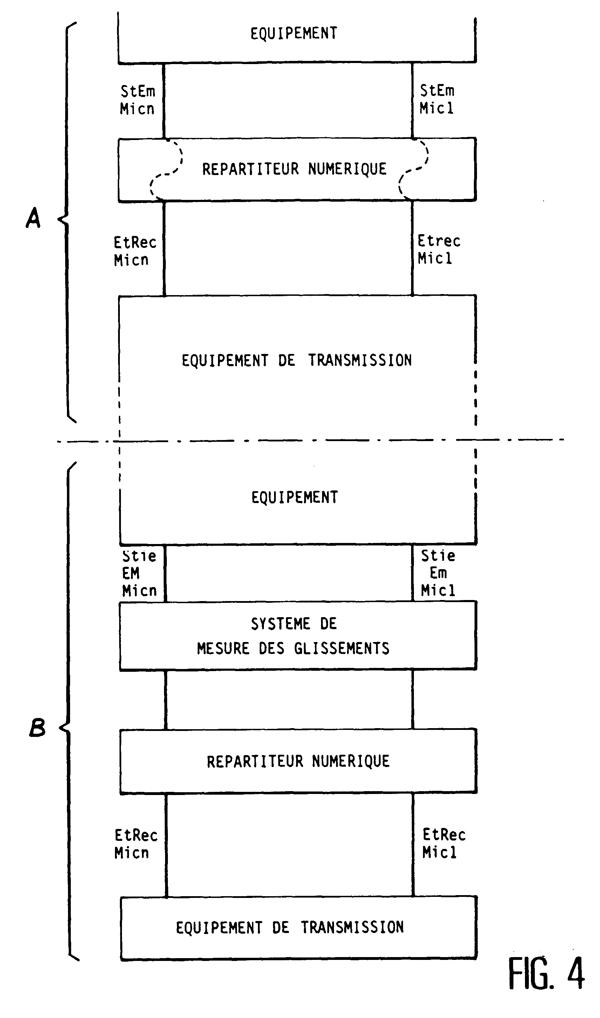

Comme on peut le voir sur cette figure 2B, le dispositif de comptage est raccordé à une ligne de transmission numérique (2 Mbits/s) en surveillance par l'intermédiaire d'un transformateur T1 qui permet d'isoler le reste du dispositif de cette ligne sur laquelle il est raccordé. Ce raccordement, comme cela a déjà été mentionné, est non intrusif (il n'y a pas de dégradation du signal surveillé) et s'effectue soit au niveau du répartiteur numérique tel que cela est indiqué sur la figure 4 qui sera décrite ultérieurement, soit en échangeant une carte de jonction d'un châssis de multiplexage par une carte comportant ce dispositif.

En effet, comme on le verra également dans la suite de la description, ce dispositif peut se présenter sous la forme d'une seule carte électronique autonome et ne nécessitant pas de mise en oeuvre importante.

Le dispositif comporte un circuit 1 qui est amplificateur auto-égalisateur en $\sqrt{f}$ et qui permet de compenser les atténuations en ligne du signal surveillé. Il permet aussi la récupération du rythme ou horloge de réception nécessaire à la remise en forme des signaux HDB3$^+$ et HDB3$^-$ qui lui parviennent, en un signal binaire.

Ce signal binaire est appliqué aux entrées des modules de verrouillage de trame, c'est-à-dire aux entrées du premier module 30 et du deuxième module 40. Le deuxième module de verrouillage de trame reçoit également le signal binaire par l'intermédiaire d'une porte ET 50 qui reçoit sur sa deuxième entrée la sortie d'un circuit de mémorisation et de comptage portant la référence 60.

Le premier module de recherche de verrouillage de trame délivre un signal de synchronisation SYR qui est appliqué à deux modules de synchronisation portant les références 5 et 6. Les premier et deuxième modules de recherche de verrouillage de trame comportent un circuit qui est apte à détecter la reprise de verrouillage de trame RVT ou la perte de verrouillage de trame PVT.

Le signal de reprise de verrouillage de trame RVT est appliqué à l'entrée d'un compteur de bits portant la référence 8 dont la sortie est appliquée à l'une des entrées d'un circuit de détection 70 de la présence du mot de verrouillage de trame qui reçoit également le signal binaire issu de la sortie du circuit 2.

Le circuit de détection 70 de la présence du mot de verrouillage de trame permet de réaliser une comparaison entre le contenu de chaque intervalle de temps du signal binaire entrant et un mot de référence dont le contenu correspond à un mot de verrouillage de trame.

L'information de comparaison est disponible à la sortie de ce circuit 70 qui vient remettre à zéro le compteur 60 et empêcher le passage du signal binaire entrant vers le deuxième module de recherche de verrouillage de trame dans le cas où il y a égalité entre ce mot et l'information entrante.

La sortie PVT du deuxième module 40 et $\overline{PVT}$ du premier module 30 sont appliquées aux entrées d'une porte logique NOR 20 qui permet d'activer un système de comptage et de mémorisation 80 selon l'état de ces sorties.

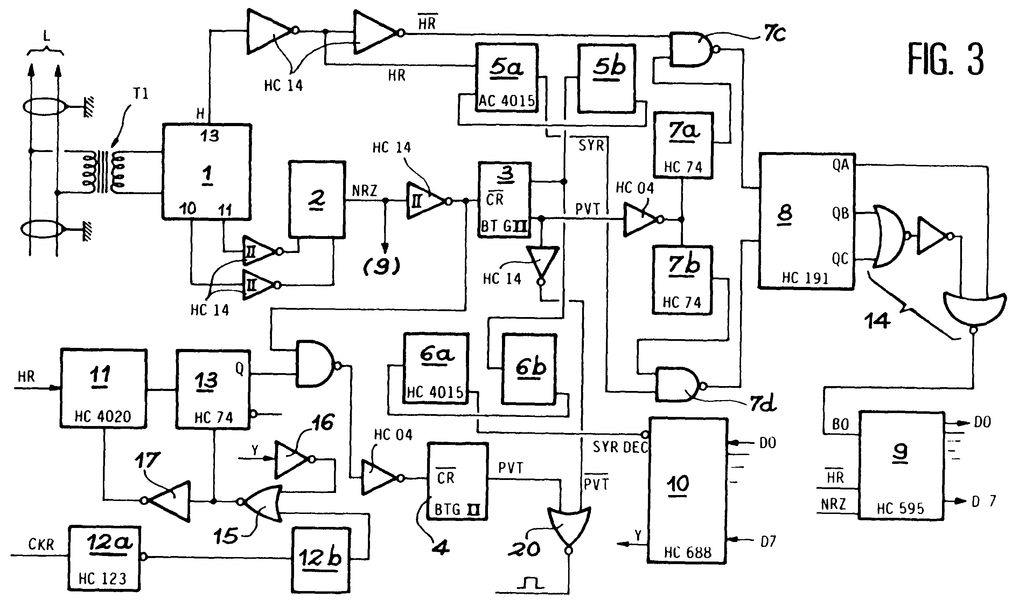

On se reporte maintenant au schéma de la Figure 3 qui correspond à un mode de réalisation particulier permettant de réaliser le comptage des glissements d'horloge d'un signal de transmission numérique de 2 Mbits/s.

De façon préférentielle, le dispositif est implanté sur une carte électronique que l'on raccorde à la ligne de transmission L.

Ce raccordement est réalisé par l'intermédiaire du transformateur T1, l'amplificateur auto-égaliseur 1 est un circuit CD 22301 qui reçoit le signal atténué et qui permet également la récupération du rythme ou horloge de réception nécessaire à la remise en forme des signaux HDB3⁺ et HDB3⁻ que l'on retrouve aux sorties 10 et 11 de ce circuit.

L'horloge réception se retrouve à la sortie 13 de ce circuit. Cette horloge H est remise en forme à l'aide d'un circuit trigger de Schmitt de type HC14 et l'on dispose aux sorties de ce circuit l'horloge réception HR ainsi que l'horloge réception complémentée $\overline{HR}$ (au niveau HC MOS).

Le circuit 2 est un circuit de type CD 22103 qui reçoit, après passage dans deux trigger de Schmitt HC 14 les signaux de sortie du circuit 1. Ce circuit 2 délivre le signal binaire NRZ qui est inversé grâce à un trigger de Schmitt HC14 et qui parvient sur l'accès $\overline{CR}$ du circuit 3.

Ce circuit 3 est un circuit de type BTG2. Le signal binaire arrive également sur une broche d'un circuit NAND HCOO dont la sortie est appliquée à l'entrée d'un inverseur HC04, ces deux portes formant la porte portant la référence 50 sur la Figure 2B.

Les circuits portant les références 5 et 6 sur la Figure 2B sont constitués en pratique chacun par des circuits de type HC4015. Ainsi, sur la Figure 3, le circuit 5 est constitué en fait par les circuits 5a et 5b et le circuit 6 est constitué par les circuits 6a et 6b. Ces circuits décalent le signal SYR issu du circuit 3.

Les circuits 7a, 7b de type HC74 et les portes 7c, 7d permettent de détecter la perte ou la reprise de verrouillage de trame et d'autoriser ou non le compteur de bits 8 de type HC191 à compter les bits entrants. Les sorties QA, QB, QC de ce compteur sont décodées par un ensemble 14 composé de deux portes NOR et d'un inverseur et fournissent le TOP B0 qui est synchrone avec chaque bit numéro 0 du signal entrant.

Le circuit 9 de type HC595 échantillonne grâce à l'horloge réception le signal binaire entrant NRZ (en série) et le convertit en données D0 à D7 parallèles, grâce au TOP B0 déjà cité.

Chaque intervalle de temps se succède au rythme de 4 µs sur les accès D0 à D7 de ce circuit.

Chaque IT est comparé grâce au circuit 10 de type HC688 pendant la durée de synchronisation SYRDEC (en provenance du circuit 6) au contenu nominal d'un IT0. L'information de comparaison est disponible à la sortie Y de ce circuit 10 qui permet de remettre à zéro la bascule D, circuit n° 13, et le compteur 512 bits, circuit n° 11, de type HC4020.

Cette information permet également d'empêcher le passage du signal binaire entrant vers le circuit 4.

Le circuit portant la référence 70 sur la Figure 2B est réalisé par les circuits 9, 10, 12A, 12B, 15, 16 et 17 sur cette Figure 3.

Le circuit portant la référence 60 sur la Figure 2B est réalise sur la Figure 3 par les circuits 11 et 13.

Le circuit 12 de type HC123 détecte le manque horloge, car il détecte le manque d'informations ou de transition sur le signal CKR qui est le OU des signaux HDB3⁺ et HDB3⁻ entrants. Ceci permet d'éviter certains déclenchements intempestifs lors de l'absence de signal en entrée.

Le décodage de glissement est effectué par la porte NOR portant la référence 20 qui reçoit sur ses entrées les signaux PVT et $\overline{PVT}$ des modules 3 et 4.

A la mise sous tension, en l'absence de signal entrant, les deux circuits 3 et 4 sont en configuration perte de verrouillage des trames (PVT), c'est-à-dire que l'accès PVT de chacun de ces circuits est dans l'état 1.

Dès que la réception d'un signal commence sur la broche $\overline{CR}$ du circuit 3, il est analysé par celui-ci. Le circuit 4 ne reçoit pas encore le signal binaire et ceci durant quelques millisecondes. Ainsi, le circuit 3 reprend son verrouillage de trame, l'accès PVT associé prend la valeur 0 et le décodage normal de l'IT0 entraîne le forçage en PVT du circuit 4.

A l'apparition d'une erreur sur le mot de verrouillage de trame, l'information Y en provenance du circuit 10 n'existe plus et la bascule D (circuit n° 13) ainsi que le compteur 512 bits, circuit n° 11, ne sont plus remis à zéro au bout de 512 bits, c'est-à-dire au bout de deux trames Tn et Tn+1. La porte NAND HC00 laisse passer le signal binaire entrant sur le circuit 4 qui commence alors l'analyse de ce signal. Deux cas peuvent alors se présenter :

- cas 1 : il n'y a pas d'autre erreur sur l'IT0 alors le système se remet en configuration d'attente, c'est-à-dire que le nouvel IT0 (pair) reçu envoie un TOP qui efface le contenu de la bascule D et du compteur 512 bits et initialise les circuits de détection de glissement,

- cas 2 : une autre erreur VT se produit sur l'IT0 pair, le circuit 3 n'a pas encore détecté de perte de verrouillage de trame, car il faut, d'après le critère établi, trois mots de verrouillage de trame (IT0 pair) consécutifs faux.

S'il s'agit effectivement d'un glissement, le mot de verrouillage de trame est reçu faux, car le circuit 3 ne l'attend pas à l'endroit où il se trouve. Par contre, le circuit 4 va le détecter.

En revanche, s'il s'agit d'une erreur du verrouillage de trame due à une erreur de transmission autre qu'un glissement, alors le circuit 4 ne détectera pas de présence du mot de verrouillage de trame.

Trois cas peuvent encore se produire :

- cas a : il n'y a plus d'erreur sur le mot IT0 pair, alors il y a réinitialisation de l'ensemble du dispositif,
- cas b : il y a une autre erreur sur le mot de verrouillage de trame (IT0 pair), alors il s'agit d'une erreur de transmission. Les deux circuits 3 et 4 sont en perte de verrouillage de trame. Il n'y a pas de détection de glissement. La reprise s'effectue normalement dès qu'un IT0 pair juste se présente,
- cas c : s'il y a effectivement un glissement, cela entraîne que le circuit 3 n'attend pas l'IT0 pair à l'endroit où celui-ci se trouve normalement. Il détecte une troisième erreur VT, ce qui provoque la mise à 1 de la sortie PVT de ce circuit. Par contre, le circuit 4 vient de recevoir son deuxième IT0 pair consécutif juste (ainsi que le bit de contrôle de l'IT0 impair) et sa sortie PVT passe alors de 1 à 0 jusqu'à ce que le circuit 3, après avoir relancé une séquence de resynchronisation, ait retrouvé le verrouillage de trame. Une impulsion de glissement est alors présente en sortie du circuit NOR portant la référence 20 (durant le temps où le signal PVT du circuit 3 est égal à 1 et le signal PVT du circuit 4 est égal à 0.

On va maintenant décrire le schéma de la Figure 4, ce schéma permet d'illustrer l'implantation d'un dispositif de comptage conforme à l'invention dans un système d'émission-réception de signaux de transmission numérique multiplexés dans le temps.

La partie A du schéma représente un système de transmission avec équipement d'émission, équipement de réception et un répartiteur numérique placé entre ces deux équipements.

La partie B du schéma représente le système avec cette fois-ci mise en place du dispositif de comptage d'horloge, ce dispositif n'étant pas en série sur le trajet des signaux mais prélève une faible partie d'énergie de ces signaux. Le prélèvement effectué au niveau du signal à 2 Mbits/s est conforme à la norme CCITT relative aux accès protégés.

## Revendications

1. Procédé de comptage des glissements d'horloge d'une liaison de transmission numérique constituée de trames (ou de secteurs) repérables par un mot de verrouillage de trame, dans lequel il y a déclenchement d'une première détection des mots de verrouillage de trame de la liaison de transmission avec comparaison à un mot de verrouillage de trame de référence, caractérisé en ce qu'il comporte les étapes suivantes :

- déclenchement d'une deuxième détection des mots de verrouillage de trame, décalée dans le temps par rapport à la première détection, dès qu'une erreur a été détectée par celle-ci,
- détermination de perte et de reprise de verrouillage de trame à partir de critères prédéterminés,
- comptage d'un glissement d'horloge lorsqu'il y a eu détermination de perte de verrouillage de trame à l'issue de la première détection et reprise de verrouillage de trame à l'issue de la deuxième détection.

2. Procédé de comptage selon la revendication 1, caractérisé en ce que le déclenchement d'une première détection consiste à comparer le contenu du premier intervalle de temps IT des trames qui se succèdent à un mot de verrouillage de trame de référence, la détection ayant bien lieu lorsqu'il y a identité.

3. Procédé de comptage selon la revendication 1 ou 2, caractérisé en ce que le déclenchement d'une deuxième détection consiste à rechercher dans la trame succédant celle pour laquelle il y a eu détection d'une erreur à l'issue de la première détection, le mot de verrouillage de trame par comparaison successive de chaque contenu d'intervalle de temps IT au mot de verrouillage de trame de référence, la détection ayant bien lieu lorsqu'il y a identité.

4. Procédé de comptage selon l'une quelconque des revendications précédentes, caractérisé en ce que la détermination de perte de verrouillage de trame a lieu lorsqu'à l'issue de la première détection, l'on a obtenu un nombre n déterminé d'erreurs et que l'on a obtenu un nombre p déterminé d'erreurs à l'issue de la deuxième détection, p étant inférieur à n, une erreur de transmission autre qu'un glissement d'horloge étant détectée.

5. Procédé de comptage selon l'une quelconque des revendications précédentes, caractérisé en ce que la détermination de reprise de verrouillage de trame a lieu dès qu'il y a détection d'un mot de verrouillage de trame lors de la deuxième détection.

6. Procédé de comptage selon l'une quelconque des revendications précédentes dans lequel le signal numérique est un signal à 2 Mbits/s dans lequel le mot de verrouillage de trame est constitué du contenu de l'intervalle de temps réservé à la synchronisation trame IT0 d'une trame paire Tn et du deuxième bit de l'IT0 de la trame impaire Tn+1, caractérisé en ce que la détermination de la perte de verrouillage de trame a lieu lorsqu'il y a trois IT0 consécutifs de trames paires reçus avec erreur et/ou trois IT0 consécutifs de trames impaires reçus avec erreur et en ce que la reprise de verrouillage de trame a lieu lorsqu'à un instant donné ts, il y a présence d'un IT0 juste d'une trame Tn, puis qu'à l'instant $t_2$, le deuxième bit de l'IT0 de la trame Tn+1 est juste et qu'à un instant t3, l'IT0 de la trame Tn+2 est juste.

7. Dispositif de comptage des glissements d'horloge d'une liaison de transmission numérique constituée de trames (ou secteurs) repérables par un mot de verrouillage de trame, comportant

- des premiers moyens de détection (30) des mots de verrouillage de trame de la liaison,

caractérisé en ce qu'il comporte de plus :

- des deuxièmes moyens de détection (40) des mots de verrouillage de trame activés par les premiers moyens lorsque ces premiers moyens ont détecté une erreur sur un mot de verrouillage de trame,
- des moyens (5, 6, 8, 30, 40, 60, 70) de détermination de perte ou de reprise de verrouillage de trame par les premiers et deuxièmes moyens de détection,
- des moyens de comptage (80) des glissements d'horloge activés par les moyen de détermination de perte et de reprise de verrouillage de trame lorsque, d'une part il y a eu perte du verrouillage de trame par les premiers moyens de détection et que, d'autre part, il y a eu reprise par les deuxièmes moyens de détection.

8. Dispositif de comptage des glissements selon la revendication 7, caractérisé en ce qu'il comporte en outre des moyens de compensation (1) des atténuations en ligne du signal numérique surveillé.

9. Dispositif de comptage selon la revendication 7 ou 8, caractérisé en ce qu'il comporte également des moyens de transformation (2) du signal codé reçu en signal binaire.

10. Dispositif de comptage selon l'une quelconque des revendications 7 à 9, caractérisé en ce que les premiers et deuxièmes moyens (30, 40) de verrouillage de trame constituent respectivement un premier et un deuxième modules de recherche comportant chacun un circuit base de temps générale (3, 4).

11. Dispositif de comptage selon la revendication 10, caractérisé en ce que les moyens de détermination de perte et de reprise de verrouillage de trame comprennent le premier module (30) de verrouillage de trame, un compteur de bit (8), deux modules de synchronisation (6, 5), un module de détection de la présence du mot de verrouillage de trame (70) et un module de mémorisation et de comptage de trames (60).

**Patentansprüche**

1. Zählverfahren der Taktschlupfe einer digitalen Übertragungsverbindung, gebildet durch Raster (oder Sektoren), lokalisierbar durch ein Rasterverriegelungswort, bei dem es eine Auslösung einer ersten Detektion der Rasterverriegelungswörter der Übertragungsverbindung mit Vergleich mit einem Rasterverriegelungs-Bezugswort gibt, **dadurch gekennzeichnet**, daß es die folgenden Schritte umfaßt:

- Auslösung einer zweiten Detektion der Rasterverriegelungswörter, zeitlich verschoben in bezug auf die erste Detektion, sobald durch diese ein Fehler detektiert worden ist,
- Feststellung des Verlustes und der Wiederaufnahme der Rasterverriegelung auf Grund von festgelegten Kriterien,
- Zählung eines Taktschlupfes, wenn es Feststellung des Verlustes der Rasterverriegelung am Ende der ersten Detektion und Wiederaufnahme der Rasterverriegelung am Ende der zweiten Detektion gegeben hat.

2. Zählverfahren nach Anspruch 1, dadurch gekennzeichnet, daß das Auslösen einer ersten Detektion darin besteht, den Inhalt des ersten Zeitintervalls IT der aufeinanderfolgenden Raster zu vergleichen mit einem Rasterverriegelungs-Bezugswort, wobei die Detektion tatsächlich stattfindet, wenn Identität herrscht.

3. Zählverfahren nach einem der Ansprüche 1 oder 2, dadurch gekennzeichnet, daß die Auslösung einer zweiten Detektion darin besteht, in dem Raster, der demjenigen folgt, bei dem es am Ende der ersten Detektion die Detektion eines Fehlers gegeben hat, das Rasterverriegelungswort durch sukzessiven Vergleich jedes Zeitintervall-Inhalts IT mit dem Rasterverriegelungs-Bezugswort zu suchen, wobei die Detektion tatsächlich stattfindet, wenn Identität herrscht.

4. Zählverfahren nach einem der vorangehenden Ansprüche, dadurch gekennzeichnet, daß die Feststellung von Rasterverriegelungsverlust stattfindet, wenn man am Ende der ersten Detektion eine bestimmte Anzahl n von Fehlern erhalten hat, und daß, wenn man am Ende der zweiten Detektion eine bestimmte Anzahl p von Fehlern erhalten hat, wobei p kleiner als n ist, ein anderer Fehler als ein Taktschlupf detektiert wurde.

5. Zählverfahren nach einem der vorangehenden Ansprüche, dadurch gekennzeichnet, daß die Feststellung des Wiederaufnehmens der Rasterverriegelung stattfindet, sobald es bei der zweiten Detektion eine Detektion eines Rasterverriegelungswortes gibt.

6. Zählverfahren nach einem der vorangehenden Ansprüche, bei dem das digitale Signal ein Signal mit 2Mbit/s ist, bei dem das Rasterverriegelungswort gebildet wird durch den Inhalt des für die Raster-Synchronisation reservierten Zeitintervalls ITO eines geraden Rasters Tn und des zweiten Bits des ITO des ungeraden Rasters Tn+1, dadurch gekennzeichnet, daß die Feststellung des Rasterverriegelungsverlustes stattfindet, wenn es drei aufeinanderfolgende, mit Fehlern empfangene ITO von geraden Rastern gibt, und/oder drei aufeinanderfolgende, mit Fehler empfangene ITO von ungeraden Rastern, und dadurch, daß die Wiederaufnahme der Rasterverriegelung stattfindet, wenn zu einem bestimmten Zeitpunkt ts ein richtiges ITO eines Rasters Tn präsent ist, dann, daß zum Zeitpunkt $t_2$ das zweite Bit des ITO des Rasters Tn+1 richtig ist und zu einem Zeitpunkt t3 das ITO des Rasters Tn+2 richtig ist.

7. Zählvorrichtung der Taktschlupfe einer digitalen Übertragungsverbindung, gebildet durch Raster (oder Sektoren), lokalisierbar durch ein Rasterverriegelungswort, umfassend:

- erste Detektionseinrichtungen (30) der Rasterverriegelungswörter der Verbindung,

dadurch gekennzeichnet, daß sie außerdem umfaßt:

- zweite Detektionseinrichtungen (40) der Rasterverriegelungswörter, aktiviert durch die ersten Einrichtungen, wenn diese ersten Einrichtungen einen Fehler in einem Rasterverriegelungswort detektiert haben,
- Einrichtungen (5, 6, 8, 30, 40, 60, 70) zur Feststellung des Verlierens oder Wiederaufnehmens der Rasterverriegelung durch die ersten und die zweiten Detektionseinrichtungen,
- Zähleinrichtungen (80) der Taktschlupfe, aktiviert durch die Einrichtungen zur Feststellung des Verlierens und Wiederaufnehmens der Rasterverriegelung, wenn es einerseits ein Verlieren der Rasterverriegelung durch die ersten Detektionseinrichtungen gegeben hat und andererseits ein Wiederaufnehmen durch die zweiten Detektionseinrichtungen.

8. Zählvorrichtung nach Anspruch 7, dadurch gekennzeichnet, daß sie außerdem Kompensationseinrichtungen (1) der Dämpfungen bzw. Abschwächungen des überwachten digitalen Signals in der Leitung umfassen.

9. Zählvorrichtung nach Anspruch 7 oder 8, dadurch gekennzeichnet, daß sie ebenfalls Umwandlungseinrichtungen (2) des als Binärsignal empfangenen codierten Signals umfassen.

10. Zählvorrichtung nach einem der Ansprüche 7 bis 9, dadurch gekennzeichnet, daß die ersten und zweiten Rasterverriegelungseinrichtungen (30, 40) jeweils einen ersten und einen zweiten Suchmodul bilden, von denen jeder eine allgemeine Zeitbasis-Schaltung (3, 4) umfaßt.

11. Zählvorrichtung nach Anspruch 10, dadurch gekennzeichnet, daß die Einrichtungen zur Feststellung des Verlierens und Wiederaufnehmens der Rasterverriegelung den ersten Rasterverriegelungsmodul (30), einen Bitzähler (8), zwei Synchronisationsmodule (6, 5), einen Präsenz-Detektionsmodul des Rasterverriegelungsworts (70) und einen Rasterspeicher- und -zählmodul (60) umfassen.

## Claims

1. Process for counting clock slips in a digital transmission link constituted by frames (or sectors) indicatable by a frame locking word, involving initiating a first detection of the frame locking words of the transmission link with comparison with a reference frame locking word,
characterized in that it comprises the following stages:

initiating a second detection of the frame locking words, time lagged compared with the first detection, as soon as an error has been detected by the latter,

determination of the frame locking loss and resumption on the basis of predetermined criteria,

counting clock slips when there has been a determination of a frame locking loss at the end of the first detection and a frame locking resumption at the end of the second detection.

2. Counting process according to claim 1, characterized in that the initiation of a second detection consists of comparing the content of the first time interval IT of the frames succeeding one another with a reference frame locking word, detection taking place when identity exists.

3. Counting process according to claims 1 or 2, characterized in that the initiation of a second detection consists of seeking in the frame succeeding that for which there has been a detection of an error at the end of the first detection, the frame locking word by successive comparison of each content of time interval IT with the reference frame locking word, detection taking place when identity exists.

4. Counting process according to any one of the preceding claims, characterized in that the determination of the frame locking loss takes place when, at the end of the first detection, a given number n of errors has been obtained and a given number p of errors has been obtained at the end of the second detection, p being below n, a transmission error other than a clock slip being detected.

5. Counting process according to any one of the preceding claims, characterized in that the determination of frame locking resumption takes place as soon as a frame locking word is detected during the second detection.

6. Counting process according to any one of the preceding claims, in which the digital signal is a 2Mbit/s signal, the frame locking word being constituted by the content of the time interval reserved for frame synchronization ITO of an even frame Tn and the second bit of the ITO of the odd frame Tn+1, the determination of the frame locking loss taking place when three consecutive ITO of even frames are received with error and/or three consecutive ITO of odd frames received with errors and frame locking resumption takes place when at a given instant t1 there is a presence of a correct ITO of one frame Tn and then at the instant t2 the second bit of the ITO of the frame Tn+1 is correct and that at an instant t3, the ITO of the frame Tn+2 is correct.

7. Apparatus for counting the clock slips of a digital transmission link constituted by frames (or sectors) indictable by a frame locking word, involving first detection means (30) for the frame locking words of the link, characterized in that it also comprises:

second detection means (40) for frame locking words activated by the first means when said first means have detected an error on a frame locking word,

means (5, 6, 8, 30, 40, 60, 70) for the determination of the frame locking loss or resumption by first and second detection means,

means (80) for counting the clock slips activated by the frame locking loss and resumption determination means when, on the one hand, there has been a frame locking loss by the first detection means and, on the other hand, when there has been a resumption by the second detection means.

8. Slip counting apparatus according to claim 7, characterized in that it also comprises means (1) for compensating inline attenuations of the monitored digital signal.

9. Counting apparatus according to claim 7 or 8, characterized in that it also comprises means (2) for transforming the coded signal received into a binary signal.

10. Counting apparatus according to any one of the claims 7 to 9, characterized in that the first and second means (30, 40) respectively constitute a first and a second frame locking seeking modules each having a general time base circuit (3, 4).

11. Counting apparatus according to claim 10, characterized in that the frame locking loss and resumption determination means comprise the first frame locking module (30), a bit counter (8), two synchronization modules (6, 5), a frame locking word presence detection module (70) and a frame counting and storage module (60).

*201*

DECLENCHEMENT 1ère DETECTION

*202*

DETECTION D'ERREUR DU VT

NON

OUI

*203*

DECLENCHEMENT 2ème DETECTION

*206*

PAS DE
PVT

*205*

DETECTION
REPRISE VT

DETECTION
D'ERREUR
PERTE VT

*204*

NON

OUI

ERREUR DE
TRANSMISSION

COMPTAGE D'UN
GLISSEMENT
D'HORLOGE

*301*

*300*

FIG. 1

# FIG. 2A

```
100
101 ─── MISE SOUS TENSION

102 ─── PERTE VT ──────────────────────────┐
                                           │
                                    206    │
103 ─── CRITERE REPRISE VT ◄─── PAS DE      │
        ATTEINT              PVT            │
        SUR LE 1er MODULE                   │
                                           │
104 ─── FORCAGE EN PVT DU                   │
        2ème MODULE                         │

200                                         │

202 ─── EVT DETECTEE SUR ──NON──────────────┤
        LE 1er MODULE                       │
              │OUI                          │
203 ─── LANCEMENT DE LA RECHERCHE           │
        VT SUR LE 2ème MODULE               │

204                                         │
204a ── EVT DETECTEE SUR ──NON──────────────┤
        LE 1er MODULE                       │
              │OUI                          │
204b ── EVT DETECTEE SUR ──NON──────────────┤
        LE 1er MODULE                       │
              │OUI                          │

205 ─── CRITERE REPRISE VT ──NON────────────┤
        ATTEINT                             │
        SUR LE 2ème MODULE                  │
              │OUI                          │
300 ─── INCREMENTATION, DATATION ───────────┘
        DU COMPTEUR GLISSEMENT
```

# FIG. 2B

FIG. 3

EP 0 540 397 B1

FIG. 4